# EUROPÄISCHE PATENTSCHRIFT

(11) **EP 3 112 327 B1**
(45) Veröffentlichungstag und Bekanntmachung des Hinweises auf die Patenterteilung: **15.11.2017**
(21) Anmeldenummer: 15001933.9
(22) Anmeldetag: 30.06.2015
(51) Int. Cl.: C04B 28/02, C04B 41/00, C04B 41/53, C04B 41/72, E01C 7/35, E01C 11/24, B28B 11/00, C04B 103/22, C04B 111/00, C04B 111/10

(54) **HALBSTARRE BELAEGE MIT ERHOEHTER GRIFFIGKEIT UND VERFAHREN ZU IHRER HERSTELLUNG**
SEMI RIGID COATINGS WITH INCREASED GRIP AND METHOD FOR THEIR MANUFACTURING
REVETEMENTS SEMI-RIGIDES A HAUTE ADHERENCE ET LEUR PROCEDE DE FABRICATION

(43) Veröffentlichungstag der Anmeldung: 04.01.2017
(73) Patentinhaber: HeidelbergCement AG, 69120 Heidelberg (DE)
(72) Erfinder: Wortmann, Kai, 37603 Holzminden (DE); Wagner, Eckhard, 69120 Heidelberg (DE)
(74) Vertreter: Zellentin & Partner mbB Patentanwälte

(56) Entgegenhaltungen:
- EP-A1- 1 281 698
- WO-A1-2008/003448
- WO-A1-2016/056910
- WO-A2-2008/128120
- DE-B3-102013 013 102
- JP-A- H11 291 212
- JP-A- H11 292 594
- JP-A- 2001 106 583
- JP-A- 2008 156 131

## Beschreibung

Die vorliegende Erfindung betrifft halbstarre Beläge mit erhöhter Griffigkeit und ein Verfahren zu deren Herstellung.

Unter einer halbstarren Deckschicht bzw. einem halbstarren Belag ist ein vermörtelter, bitumengebundener Bodenbelag zu verstehen. Der halbstarre Belag besteht aus einem bitumengebundenen Traggerüst, kurz Asphalttraggerüst, dessen Hohlraumgehalt typischerweise im Bereich von 10 bis 40 Vol- % liegt und das mit einem dünnflüssigen, hochfesten (≥ 100 N/mm² n. 28 d) Mörtel gefüllt wird.

Der Belag vereint bei richtiger Ausführung die Flexibilität des Asphalts mit der Festigkeit des Betons. Das Bindemittel ist schwindkompensiert und schnellabbindend. Auf Grund der schnellen Festigkeitsentwicklung kann der halbstarre Belag je nach Temperatur (bei ca. 20 °C) bereits nach 24 Stunden in Betrieb genommen werden. Die Druckfestigkeit des fertigen Belages beträgt ca. ≥ 10 N/mm², Biegezugfestigkeit des fertigen Belages beträgt ≥ 4 N/mm². Ein Vorteil des halbstarren Belages ist die Ausführbarkeit ohne Fugen.

Der halbstarre Belag wird meistens bei hoher Beanspruchung verwendet, wo herkömmlicher Asphalt nicht ausreichend ist, oder wo die Fugen beim Beton problematisch sind. Er ist für lange andauernde Belastungen und für Anwendungsgebiete mit sehr großen Temperaturschwankungen geeignet. Außerdem besitzt er eine sehr dichte Oberfläche und ist deswegen flüssigkeitsdicht sowie frost- und tausalzbeständig.

In der Regel werden nur die oberen Schichten einer Verkehrsfläche in Form eines halbstarren Belages ausgeführt, da hiermit vor allem der Widerstand gegen bleibende Verformung erhöht werden soll. Beispielsweise zeigt der Belag im Vergleich zu Asphalt keine Spurrinnenbildung oder Eindrücke von Punktlasten. Die darunter befindlichen Tragschichten werden meistens in üblicher Bauweise als asphalt- oder zementgebundene Tragschichten ausgeführt.

Den derzeitigen Stand der Technik in Bezug auf halbstarre Beläge fasst z.B. das "Merkblatt für die Herstellung von halbstarren Deckschichten" der Forschungsgesellschaft für Straßen und Verkehrswesen e.V., Ausgabe 2010, ISBN 978-3-941790-51-3 zusammen. Demgemäß ist in einem Mörtel für halbstarre Beläge als Bindemittel Zement (nach DIN EN 197 oder mit bauaufsichtlicher Zulassung) mit Feinstbindemittel und/oder Silikastaub zu verwenden, mit einem Größtkorn < 0,25 mm (DIN EN 12620). An die Eigenschaften des Frischmörtels sowie des Festmörtels werden die in Tabelle 1 aufgelisteten, spezifischen Anforderungen gestellt:

**Tabelle 1**

| Materialkennwerte | Anforderung | Prüfverfahren |
|---|---|---|
| Fließvermögen | sofort ≤ 45 s | Ausflusszeit DIN EN 445, |
| Frischmörtel: | nach 60 min. ≤ 55 s | Abschnitt 4.3.1 |
| Volumenänderung am Prisma Festmörtel | ≤ 0,5 % | DIN 52450 |
| Druckfestigkeit | nach 24 h ≥ 40 N/mm² | DIN EN 196-1 |
| | nach 3d ≥ 65 N/mm² | |
| | nach 28 d ≥ 100 N/mm² | |
| Biegezugfestigkeit | nach 24 h ≥ 5 N/mm² | DIN EN 196-1 |
| | nach 3d ≥ 10 N/mm² | |
| | nach 28 d ≥ 12 N/mm² | |

Die Erstellung von halbstarren Belägen erfolgt, indem ein Asphalt mit einem hohen Hohlraumanteil, üblich sind 10 bis 40 %, insbesondere 20 bis 35 %, auf einem geeigneten Unterbau erstellt wird. Die Fertigung sollte maschinell erfolgen, da für die Verfüllung mit Mörtel eine besonders ebene Oberfläche nötig ist. Die Asphaltdicke liegt üblicherweise bei 2 bis 10 cm, bevorzugt bei 4 bis 6 cm.

Der Mörtel wird als Slurry, d.h. als Mischung von Zement, Feinstkomponente und ggfs. Füllstoff mit Wasser, aber im Wesentlichen ohne Gesteinskörnungen, aufgebracht. Im Stand der Technik sind auch Beläge beschrieben, bei denen Mörtel mit größeren Mengen Gesteinskörnung verwendet werden.

Ein Problem bei halbstarren Belägen ist die Griffigkeit. Für Asphaltoberflächen wird diese in der ZTV-Asphalt StB 07/13 definiert. Diese Anforderungen sind für andere Arten der Oberflächenausgestaltung als Mindestwerte sinngemäß übernommen. Die dünnflüssige Mörtelslurry ergibt eine vergleichsweise ebene Oberfläche. Bei entsprechenden Anforderungen muss daher die Oberfläche aufgeraut werden, um die notwendige Rauigkeit und damit Griffigkeit zu erhalten.

Hierzu sind derzeit zwei Verfahren üblich. Einerseits kann die Oberfläche nach dem Erhärten der Mörtelslurry durch mechanische Bearbeitung, beispielsweise durch Kugelstrahlen, aufgeraut werden, siehe z.B.: update - Aktuelles zum Thema Betonstrassen, Halbstarre Deckschichten für hochbelastete Verkehrsflächen, 04/2007, Seite 6.

Andererseits kann, wie bei anderen Belägen üblich, die Oberfläche abgestreut werden. Üblich ist ein Abstreuen mit Sand (z.B. Edelbrechsand), ggfs. nachdem eine Epoxyschicht aufgetragen wurde, siehe z.B.: "Straßen- und Tiefbau", Dietrich Richter, Manfred Heindel, 1. Auflage 1978, 12. Auflage 2012 ISBN 978-3-8085-4672-7 Seite 452 und "Halbstarre Deckschichten", A.Bach et.al., asphalt Heft 7/2002 Seite 12 sowie Merkblatt für die Herstellung von Halbstarren Deckschichten M HD, FGSV, Seite 15.

Beide Verfahren erfordern Zeit und verursachen erhebliche Zusatzkosten. Die fehlende Griffigkeit bzw. der Aufwand zu deren Erhöhung sind deswegen ein wesentliches Hindernis für den Einsatz von halbstarren Belägen als langlebiger Ersatz für Asphalt- oder Betonbeläge auf allen Verkehrsflächen, z.B. auch auf Landstraßen.

Es besteht daher die Aufgabe, halbstarre Beläge mit hoher Griffigkeit zu finden, welche einfacher und vor allem kostengünstiger herstellbar sind.

Überraschend wurde nun gefunden, dass durch Aufsprühen von Verzögerer auf die Oberfläche einer frisch eingebrachten Mörtelslurry die Erhärtung in den oberen Millimetern soweit verzögert werden kann, dass nach dem Erhärten der nicht vom Verzögerer erreichten übrigen Schicht der Mörtelslurry die obere Schicht abgebürstet werden kann.

Die obige Aufgabe wird daher durch einen halbstarren Belag aus einer in ein Asphalttraggerüst eingefüllten Mörtelslurry gelöst, bei dem nach dem Einbringen der Mörtelslurry in das Asphalttraggerüst ein Verzögerer auf die Oberfläche der Mörtelslurry aufgebracht wurde und eine obere Schicht mit verzögerter Erhärtung nach dem Erhärten der übrigen Mörtelslurry mechanisch entfernt wurde. Die Aufgabe wird außerdem durch ein Verfahren zur Herstellung von halbstarren Belägen gelöst, umfassend die Schritte:
Erstellen eines Asphalttraggerüstes,
Einbringen einer Mörtelslurry,
Aufsprühen eines Verzögerers auf die Oberfläche der eingebrachten Mörtelslurry und
mechanisches Abtragen der oberen Schicht mit verzögerter Erhärtung nach dem Erhärten der übrigen Mörtelslurry.

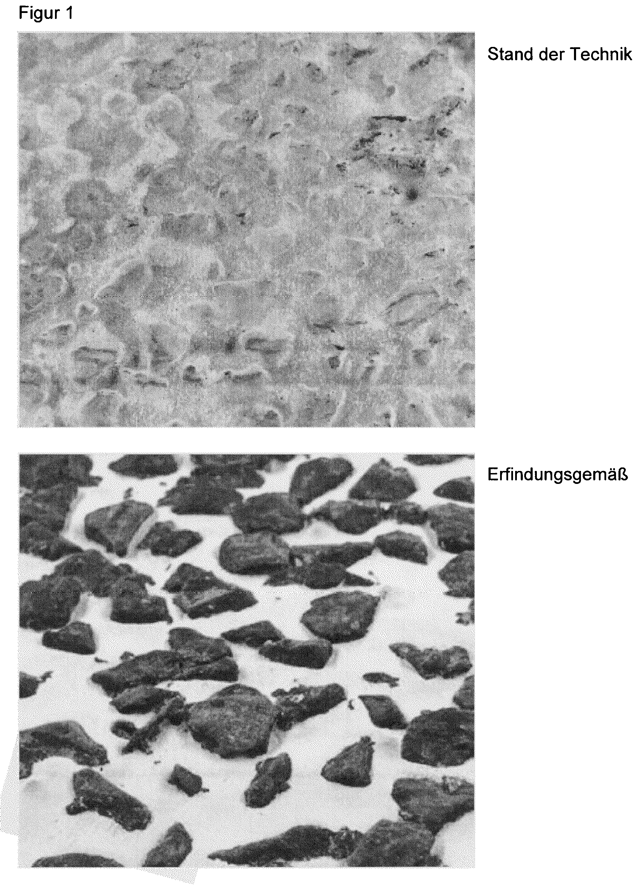

Ein solches Vorgehen ist von der Herstellung sogenannter Waschbetonoberflächen bekannt und wurde bereits in der Patentschrift GB 228,538 aus dem Jahr 1928 beschrieben. Auch bei der Erstellung von Belägen aus Beton wird teilweise so verfahren. Für halbstarre Beläge ist die Technik jedoch trotz des bereits sehr lange bestehenden Bedarfs nicht in Betracht gezogen worden. Sie erlaubt überraschend auf verblüffend einfache Weise, schnell und kostengünstig, eine optimal griffige Oberfläche zu erhalten. In Figur 1 sind oben ein halbstarrer Belag ohne Erhöhung der Griffigkeit und unten ein erfindungsgemäßer halbstarrer Belag gezeigt. Man erkennt deutlich, wie durch das erfindungsgemäße Verfahren die oberen Körner des Asphalttraggerüstes aus der Oberfläche der Mörtelslurry ragen. Im Unterschied zum Kugelstrahlen werden die Körner des Traggerüstes beim Abtragen der nicht erhärteten Mörtelslurryschicht kaum beeinträchtigt. Anders als eingestreute Körner sind sie fest mit dem Asphalttraggerüst verbunden und lösen sich deswegen auch bei starker Beanspruchung nicht so leicht ab. Aufsprühen von Verzögerer und Abbürsten sind leicht in die Herstellung des Belags zu integrieren und erfordern wenig Zeit, die Kosten sind deutlich geringer als für ein Kugelstrahlen oder Aufbringen einer Kunstharzschicht und Abstreuen. Somit werden halbstarre Beläge für eine breite Anwendung bei Verkehrsflächen, insbesondere auch für Land- und Bundesstrassen, Autobahnen und andere Fernstrassen sowie Strassen innerorts, konkurrenzfähig.

Der erste Schritt für das erfindungsgemäße Verfahren bzw. die Erstellung des erfindungsgemäßen Belages besteht in der Erstellung des Asphalttraggerüstes auf einem bereitgestellten Unterbau. Bei diesem kann es sich entweder um einen in an sich bekannter Weise hergestellten, neuen Unterbau handeln oder es wird bei der Sanierung einer Verkehrsfläche der alte Oberbelag abgetragen und der vorhandene Unterbau genutzt, falls nötig nach Ausbesserung.

Die Erstellung des Asphalttraggerüstes und die Herstellung der Mörtelslurry sowie ihr Einbringen erfolgen ebenfalls wie aus dem Stand der Technik bekannt. Die Mörtelslurry muss nicht besonders angepasst werden. Brauchbare Mörtelslurries sind z.B. in WO 02/75052 A1, WO 2009/133094 A1,
WO 2008/128120 A1 und JP H10-1345 beschrieben, wobei einige davon wegen eines höheren Gehaltes an Gesteinskörnungen nicht die in Deutschland geforderte Festigkeit erreichen. Bei einem Einsatz des halbstarren Belages für "normale" Straßen ist das auch nicht unbedingt notwendig. Hier ist aber die gemäß der vorliegenden Erfindung erreichte Rauigkeit unabdingbar, denn z.B. auf Landstraßen wird eine viel höhere Geschwindigkeit gefahren und daher spielt die Griffigkeit eine wichtigere Rolle als bei den bisher üblichen Einsatzorten für halbstarre Beläge.

Die Mörtelslurry wird in der Regel als Trockenmörtel bereitgestellt, der zur Herstellung der Slurry mit Wasser in einem Verhältnis Trockensubstanz:Wasser im Bereich von 1:0,26 bis 1:0,36, vorzugsweise im Bereich von 1:0,28 bis 1:0,32, vermischt wird. Der Trockenmörtel enthält Zement und wie an sich bekannt eine Feinstkomponente, bevorzugt Feinstzement wie z.B. die Feinstanteile der Komponente Zement. Der Trockenmörtel kann weiterhin inerte, anorganische Füller wie Kalksteinmehl und/oder andere Mineralstoffe oder Mineralstoffgemische enthalten. In der Mörtelsurry, insbesondere im Trockenmörtel, sind typischerweise verflüssigende Zusatzmittel enthalten. Geeignet sind beispielsweise solche auf Basis von Ligninsulfonaten, Melaminharzen, (Poly-)Naphthalinsulfonaten und/oder als Polycarboxylatether (PCE) bezeichnete Stoffe oder Stoffgemische, Acrylbasierte Stoffe oder Stoffgemische, Vinyl-basierte Stoffe oder Stoffgemische, Carbonsäurebasierte Stoffe oder Stoffgemische, sowie Derivate und/oder eine Mischung aus diesen. Vorzugsweise werden das/die verflüssigenden Zusatzmittel in Mengen im Bereich von 0,5 bis 5 Gew.-% bezogen auf die Trockenmasse der Mörtelslurry, insbesondere von 0,6 bis 1 Gew.-%, eingesetzt. In der Mörtelslurry können organische und/oder anorganische Verzögerer wie z.B. Fruchtsäuren, vorzugsweise Gluconate, und Phosphate zum Einsatz kommen. Diese werden in der Regel in Mengen im Bereich von 0,01 bis 2 Gew.-% bezogen auf die Trockenmasse der Mörtelslurry, insbesondere von 0,01 bis 0,05 Gew.-%, eingesetzt. Es können auch andere an sich bekannte Zusatzmittel und/oder Zusatzstoffe enthalten sein.

Es ist bevorzugt, eine bereits bei hohen Temperaturen des Asphalttraggerüstes einbringbare und/oder thixotrope Mörtelslurry gemäß der nicht vorveröffentlichten PCT/EP 2015/000391 einzusetzen. Dadurch lassen sich Kosten und Zeitaufwand noch weiter verringern. Gemäß PCT/EP 2015/000391 kann eine Mörtelslurry aus Zement mit Feinstanteil, die zumindest ein Fließmittel enthält, aber frei von Silikastaub ist, bereits bei Asphalttemperaturen von 80 °C eingebracht werden. Setzt man einer Mörtelslurry ein Geliermittel zu, ergibt sich eine latent thixotrope Mörtelslurry, welche auf Gefällestrecken eingebaut werden kann und nicht oder in vernachlässigbar geringer Menge aus dem Traggerüst herausfließt. Diese Mörtelslurries haben einen hohen Zementgehalt und sind, abgesehen von Füllstoffen, vorzugsweise frei von Gesteinskörnung. Besonders bevorzugte Zusammensetzungen für Mörtelslurries sind in Tabelle 2 angegeben.

**Tabelle 2**

| **Trockensubstanz** | **Anteil [Gew.-%]** | **bevorzugter Anteil [Gew.-%]** |
|---|---|---|
| Zement | 62 - 99,5 | 88 - 94 |
| Zusatzstoffe | 0 - 35 | 3 - 10 |
| verflüssigende Zusatzmittel | 0,5 - 5 | 0,6 - 1 |
| verzögernde Zusatzmittel | 0,01 - 2 | 0,01 - 0,05 |
| Geliermittel | 0,001 - 1 | 0,005 - 0,25 |

Die Mörtelslurry kann an sich bekannte Zusatzmittel enthalten, mit denen vor allem die Verarbeitbarkeit gesteuert werden kann. Diese sind aus der Betonherstellung bekannt und werden in den üblichen Mengen eingesetzt.

Auch Zusatzstoffe können verwendet werden, beispielsweise Pigmente oder die in WO 2009/133094 A1 vorgeschlagenen Photokatalysatorteilchen. So können zur farblichen Ausgestaltung der Mörtel handelsübliche Farbpigmente enthalten sein, z.B. für bunte Mörtel Pigmente auf Basis von Eisenoxid und für schwarze Mörtel Pigmente auf Basis von Eisenoxid und/oder Kohlenstoff (Ruß). Wenn Pigmente verwendet werden, kommen sie in den an sich bekannten, üblichen Mengen zum Einsatz.

Durch eine Einfärbung der Mörtelslurry mit Pigmenten lassen sich sehr einfach und kostengünstig verschiedene Bereiche von Verkehrsflächen markieren, beispielsweise Fahrradwege, Kreisverkehre usw., indem man die Slurry aufteilt und einen Teil färbt oder die Teile unterschiedlich färbt. Zur Kennzeichnung werden dann die Mörtelslurries mit unterschiedlichen Farben genau nur in den Bereichen eingefüllt, in denen die jeweilige Farbe vorliegen soll. Für diese Anwendung ist eine durch Verdickungsmittel thixotrop eingestellte Mörtelslurry besonders bevorzugt. Als Verdickungsmittel eignen sich z.B. Ton, beispielsweise Bentonit; Kieselsäure wie pyrogene Kieselsäure mit hydrophiler Oberfläche und Biopolymere, insbesondere Stärke und Polysaccharide, sowie Gemische von mindestens zwei davon. Wenn nicht thixotrope Mörtelslurries verwendet werden, ist eine besondere Sorgfalt hinsichtlich der Abdichtungen notwendig.

Die Mörtelslurry wird wie im Stand der Technik in das Asphalttraggerüst eingebracht. Erfindungsgemäß können halbstarre Beläge auf Tragschichten erstellt werden, indem auf diese zuerst ein Asphalttraggerüst mit einem Hohlraumanteil im Bereich von 10 bis 40 Vol.-% aufgebracht wird. Dann wird die Mörtelslurry bereitgestellt, z.B. indem der Trockenmörtel mit Wasser angemacht wird. Die notwendigen bzw. gewünschten Komponenten sind bis auf das Wasser bevorzugt trocken und vorzugsweise im Trockenmörtel enthalten. Eine oder mehrere Komponenten können aber auch beim Anmachen mit Wasser in diesem oder davor, zugleich oder danach zugefügt werden. Die erhaltene Mörtelslurry wird auf das Asphalttraggerüst aufgebracht und verfüllt dann den Hohlraumanteil vollständig. Direkt im Anschluss erfolgt erfindungsgemäß das Aufbringen des Verzögerers.

Die erfindungsgemäß aufgebrachten Verzögerer sind bekannt. Brauchbar sind beispielsweise zugelassene Produkte der Bauchemie, die in Kombination mit Nachbehandlungsmitteln als wässrige Compounds im Handel bezogen werden können. Diese Compounds sind im Bereich des Betonbaus in den Technischen Lieferbedingungen für Flüssige Nachbehandlungsmittel TL NBM StB 09 geregelt. Nachbehandlungsmittel mit Verzögererkomponente sind üblicherweise auf Basis von Parafinwachsen oder Acrylaten oder Gemischen daraus hergestellt, wobei die enthaltene verzögernde Komponenete einen Anteil im Compound von 5 bis 20 Gew.-% bevorzugt von 6 - 12 Gew.-% hat. Übliche und brauchbare Verzögerer sind Phosphate; Zucker im weitesten Sinne wie z.B. Saccharose; Fruchtsäuren und Fruchtsäurederivate im weitesten Sinne wie z.B. Zitronensäure und Gluconate; Nitrite; Nitrate und Mischungen daraus. Bevorzugt wird der Verzögerer ausgewählt unter Saccarose und Phosphaten oder Gemischen davon.

Die Applikationsmenge des wässrigen Compounds beträgt typischerweise von 100 bis 300 g/m², vorzugsweise von 150 bis 200 g/m², bei kommerziellen Produkten ist die vom Hersteller vorgegebene Dosierung einzuhalten. In der Regel wird soviel Verzögerer aufgebracht, dass eine obere Schicht von etwa 1 bis 5 mm, vorzugsweise von etwa 1 bis 3 mm in der Erhärtung verzögert wird. Die Verzögerung liegt üblicherweise im Bereich von einigen Stunden bis zu 24 h.

Das Aufbringen des oder der Verzögerer erfolgt bevorzugt durch Aufsprühen einer Lösung oder Suspension. Dazu eignen sich handelsübliche Sprühgeräte (Hand betrieben oder Motor betrieben) und bevorzugt ein maschineller Auftrag, z.B. mit Sprühbalken oder mit entsprechend ausgerüsteten Radladern, wie er aus der Behandlung von Betonfahrbahnbelägen bekannt ist.

Durch den aufgebrachten Verzögerer wird die Erhärtung der oberen Schicht der Mörtelslurry verzögert. Da die übrige Mörtelslurry den (zusätzlichen) Verzögerer nicht enthält, erhärtet sie wie eingestellt, normalerweise in 2 bis 12 Stunden, vorzugsweise in 2 bis 6 Stunden. Nachdem die übrige Mörtelslurry erhärtet ist und bevor die obere Schicht erhärtet, wird die obere Schicht mechanisch entfernt. Insbesondere wird die obere Schicht abgebürstet. Dazu wird die Fläche vorzugsweise mit einem LKW oder Radlader befahren der mit Reinigungsbürsten ausgerüstet ist, wie ebenfalls aus der Nachbehandlung von Betonfahrbahnbelägen bekannt. Ebenso sind andere zum Kehren von Strassen und Fußwegen bekannte Vorrichtungen (Kehrmaschinen) geeignet, die je nach zu behandelnder Fläche ausgewählt werden.

Sobald die obere Schicht entfernt ist, kann die Verkehrsfläche genutzt werden. Das erfindungsgemäße Verfahren erlaubt daher eine außerordentlich schnelle Erstellung oder Sanierung von Verkehrsflächen. Der erfindungsgemäße Belag ist äußerst widerstandsfähig und hochbelastbar. Dabei ist er zugleich griffig und durch die erreichte Kostenminimierung auch für normale Verkehrsflächen konkurrenzfähig, wenn man die Kosten auf die erwartbare Nutzungsdauer bezieht. Bisher wurden halbstarre Beläge nur für flächenmäßig begrenzte, hochbelastete Verkehrsflächen genutzt, beispielsweise für Busbuchten, Busbahnhöfe oder LKW Parkflächen an Bundesautobahnen.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Es wurde ein Asphalttraggerüst mit einem Porenvolumen von 30 % erstellt. Nach Fertigstellung des Asphalttraggerüsts wurden die Seitenbereiche abgedichtet, um einen unkontrollierten Austritt der Zementslurry zu verhindern. Eine Zementslurry wurde aus 94,29 % Zement, 5 % mineralischem Füllstoff, 0,7 % Verflüssiger und mit 0,01 % Geliermittel mit einem Wasser:Zementwert von 0,30 gemischt. Das Asphalttraggerüst wurde dann mit der kurz zuvor vorbereiteten Zementslurry vergossen. Direkt nach dem Vergießen wurde die Oberfläche mit einem Gummischieber abgezogen. Sofort im Anschluß wurde bei einer Probe ein wässriges Compound aus Nachbehandlungsmittel mit Verzögerer Komponente in einer Menge von 195 g/m² aufgesprüht. Nach Ablauf von ca. 18 Stunden wurde die Oberfläche bei beiden Proben scharf abgebürstet. Die Oberflächen sind in der Figur 1 dargestellt. Die mit Verzögerer behandelte Oberfläche in Figur 1 unten ist durch den Abtrag der Mörtelslurry sehr griffig. Die übliche Oberfläche bekannter halbstarrer Beläge in Figur 1 oben ist dagegen relativ eben und wäre als Fahrbahnoberfläche für z.B. Landstrassen so nicht geeignet.

## Patentansprüche

1. Halbstarrer Belag für Verkehrsflächen aus einer in ein Asphalttraggerüst eingefüllten Mörtelslurry, **dadurch gekennzeichnet, dass** nach dem Einbringen der Mörtelslurry in das Asphalttraggerüst ein Verzögerer auf die Oberfläche der Mörtelslurry aufgebracht wurde und eine obere Schicht mit verzögerter Erhärtung nach dem Erhärten der übrigen Mörtelslurry mechanisch entfernt wurde.

2. Belag gemäß Anspruch 1, **dadurch gekennzeichnet, dass** die Mörtelslurry mit Pigmenten eingefärbt ist.

3. Belag gemäß Anspruch 1 oder 2, **dadurch gekennzeichnet, dass** die Mörtelslurry bis zu einer Stärke von 1 bis 5 mm, vorzugsweise von 1 bis 3 mm, entfernt wurde.

4. Verfahren zur Herstellung von halbstarren Belägen, umfassend die Schritte:
Erstellen eines Asphalttraggerüstes,
Einbringen einer Mörtelslurry,
Aufsprühen eines Verzögerers auf die Oberfläche der eingebrachten Mörtelslurry und
Abtragen der oberen Schicht mit verzögerter Erhärtung nach dem Erhärten der übrigen Mörtelslurry und vor dem Erhärten der oberen Schicht.

5. Verfahren gemäß Anspruch 4, **dadurch gekennzeichnet, dass** der Verzögerer mit einem Handsprühgerät oder vorzugsweise maschinell, insbesondere mit einem Sprühbalken oder mit entsprechend ausgerüsteten Radladern, aufgebracht wird.

6. Verfahren gemäß Anspruch 4 oder 5, **dadurch gekennzeichnet, dass** der Verzögerer in einer Menge von 100 bis 300 g/m², vorzugsweise von 150 bis 200 g/m², aufgebracht wird.

7. Verfahren gemäß einem der Ansprüche 4 bis 6, **dadurch gekennzeichnet, dass** der Verzögerer ausgewählt ist unter Zuckern wie Saccharose; Phosphaten; Fruchtsäuren und deren Derivaten wie Zitronensäure und Gluconaten; Nitriten; Nitraten und Gemischen davon.

8. Verfahren gemäß einem der Ansprüche 4 bis 7, **dadurch gekennzeichnet, dass** soviel Verzögerer aufgebracht wird, dass eine obere Schicht der Mörtelslurry mit einer Stärke von 1 bis 5 mm, vorzugsweise von 1 bis 3 mm, in der Erhärtung verzögert wird.

9. Verfahren gemäß einem der Ansprüche 4 bis 8, **dadurch gekennzeichnet, dass** die Erhärtung der oberen Schicht gegenüber der Erhärtung der Mörtelslurry um mindestens zwei Stunden, vorzugsweise um mindestens vier Stunden, verzögert ist.

10. Verfahren gemäß einem der Ansprüche 4 bis 9, **dadurch gekennzeichnet, dass** die obere Schicht vor dem Erhärten mit einer Kehrmaschine, insbesondere mit Reinigungsbürsten, die an einem LKW oder Radlader angebracht sind, abgebürstet wird.

11. Verfahren gemäß einem der Ansprüche 4 bis 10, **dadurch gekennzeichnet, dass** die Mörtelslurry als Bindemittel Zement mit Feinstbindemittel, mit einem Größtkorn < 0,25 mm, und einen Verflüssiger aber keinen Silikastaub enthält und nach 28 Tagen eine Druckfestigkeit ≥ 100 N/mm² aufweist.

12. Verfahren gemäß einem der Ansprüche 4 bis 11, **dadurch gekennzeichnet, dass** Teile der Mörtelslurry zur Kennzeichnung von Bereichen des Belages mit Pigmenten eingefärbt werden, wobei eingefärbte Mörtelslurry an den zu kennzeichnenden Bereichen des Belages in das Asphalttraggerüst gefüllt wird und nicht oder anders gefärbte Mörtelslurry in die restlichen Bereiche.

13. Verfahren gemäß Anspruch 12, **dadurch gekennzeichnet, dass** die Mörtelslurry durch Zugabe eines Verdickungsmittels, vorzugsweise ausgewählt unter Ton wie Bentonit; Kieselsäure wie pyrogener oder hochdisperser Kieselsäure; Biopolymeren wie Stärke oder Polysacchariden, und Gemischen davon, thixotrop eingestellt ist.

## Claims

1. A semi-rigid coating for traffic surfaces from a mortar slurry filled into an asphalt support framework, **characterized in that**, after the mortar slurry has been introduced into the asphalt support framework, a retarder has been applied to the surface of the mortar slurry and an upper layer with delayed hardening has been mechanically removed after hardening of the remaining mortar slurry.

2. A coating according to claim 1, **characterized in that** the mortar slurry is dyed with pigments.

3. A coating according to claim 1 or 2, **characterized in that** the mortar slurry has been removed to a thickness of 1 to 5 mm, preferably of 1 to 3 mm.

4. A process for the production of semi-rigid coatings, comprising the steps of:
preparing an asphalt support framework,
introducing a mortar slurry,
spraying a retarder onto the surface of the introduced mortar slurry and removing the upper layer with delayed hardening after hardening of the remaining mortar slurry and before hardening of the upper layer.

5. Method according to claim 4, **characterized in that** the retarder is applied by means of a hand spraying device, or preferably with a machine, in particular with a spray bar or with suitably equipped wheel loaders.

6. Process according to claim 4 or 5, **characterized in that** the retarder is applied in an amount of 100 to 300 g/m², preferably 150 to 200 g/m².

7. A process according to any one of claims 4 to 6, **characterized in that** the retarder is selected from sugars such as sucrose; phosphates; fruit acids and their derivatives such as citric acid and gluconates; nitrites; nitrates and mixtures thereof.

8. Process according to one of Claims 4 to 7, **characterized in that** sufficient retarder is applied so that an upper layer of the mortar slurry with a thickness of 1 to 5 mm, preferably of 1 to 3 mm, is retarded in hardening.

9. Process according to one of Claims 4 to 8, **characterized in that** the hardening of the upper layer is delayed by at least two hours, preferably by at least four hours, compared to the hardening of the mortar slurry.

10. Method according to one of Claims 4 to 9, **characterized in that** the upper layer is brushed before hardening with a sweeper, in particular with cleaning brushes, which are attached to a truck or wheel loader.

11. Method according to one of Claims 4 to 10, **characterized in that** the mortar slurry contains cement with a very fine fraction as a binder and a plasticizer but does not contain any silica dust and has a compressive strength ≥ 100 N/mm³ after 28 days.

12. Method according to one of Claims 4 to 11, **characterized in that** parts of the mortar slurry are dyed with pigments for marking areas of the coating, wherein dyed mortar slurry is filled into the asphalt support framework at the areas of the coating which are to be marked and non- dyed or differently dyed mortar slurry is introduced into the asphalt support framework in the remaining areas.

13. Process according to claim 12, **characterized in that** the mortar slurry is made thixotropic by adding a thickening agent, preferably selected from clay, such as bentonite; silica such as pyrogenic or highly dispersed silica; biopolymers such as starch or polysaccharides, and mixtures thereof.

## Revendications

1. Revêtement semi-rigide pour des surfaces de circulation à partir d'une suspension de mortier introduite dans une structure support d'asphalte, **caractérisé en ce qu'**après l'introduction de la suspension de mortier dans la structure support d'asphalte, un retardateur est appliqué sur la surface de la suspension de mortier et une couche supérieure présentant un durcissement retardé a été éliminée mécaniquement après le durcissement du reste de la suspension de mortier.

2. Revêtement selon la revendication 1, **caractérisé en ce que** la suspension de mortier est colorée par des pigments.

3. Revêtement selon la revendication 1 ou 2, **caractérisé en ce que** la suspension de mortier a été éliminée jusqu'à une épaisseur de 1 à 5 mm, de préférence de 1 à 3 mm.

4. Procédé pour la préparation de revêtements semi-rigides, comprenant les étapes
de préparation d'une structure support d'asphalte,
d'introduction d'une suspension de mortier,
de pulvérisation d'un retardateur sur la surface de la suspension de mortier introduite et
d'élimination de la couche supérieure présentant un durcissement retardé après le durcissement du reste de la suspension de mortier et avant le durcissement de la couche supérieure.

5. Procédé selon la revendication 4, **caractérisé en ce que** le retardateur est appliqué à l'aide d'un appareil de pulvérisation manuel ou de préférence à la machine, en particulier avec une rampe de pulvérisation ou une chargeuse sur roues équipée de manière correspondante.

6. Procédé selon la revendication 4 ou 5, **caractérisé en ce que** le retardateur est appliqué en une quantité de 100 à 300 g/m², de préférence de 150 à 200 g/m².

7. Procédé selon l'une quelconque des revendications 4 à 6, **caractérisé en ce que** le retardateur est choisi parmi les sucres tels que le saccharose ; les phosphates ; les acides de fruit et leurs dérivés tels que l'acide citrique et les gluconates ; les nitrites ; les nitrates et leurs mélanges.

8. Procédé selon l'une quelconque des revendications 4 à 7, **caractérisé en ce qu'**on applique une quantité de retardateur telle qu'une couche supérieure de la suspension de mortier d'une épaisseur de 1 à 5 mm, de préférence de 1 à 3 mm, est retardée en durcissement.

9. Procédé selon l'une quelconque des revendications 4 à 8, **caractérisé en ce que** le durcissement de la couche supérieure, par rapport au durcissement de la suspension de mortier, est retardé d'au moins deux heures, de préférence d'au moins quatre heures.

10. Procédé selon l'une quelconque des revendications 4 à 9, **caractérisé en ce que** la couche supérieure est brossée avant le durcissement avec une balayeuse, en particulier avec des brosses de nettoyage qui sont fixées sur un camion ou sur une chargeuse sur roues.

11. Procédé selon l'une quelconque des revendications 4 à 10, **caractérisé en ce que** la suspension de mortier contient, comme liant, du ciment avec un liant fin, présentant une dimension supérieure de grain < 0,25 mm, et un liquéfiant, mais ne contient pas de poussière de silice et présente, après 28 jours, une résistance à la compression ≥ 100 N/mm².

12. Procédé selon l'une quelconque des revendications 4 à 11, **caractérisé en ce que** des parties de la suspension de mortier sont colorées par des pigments pour la caractérisation de zones du revêtement, la suspension de mortier colorée étant chargée dans les zones à caractériser du revêtement dans la structure support d'asphalte et de la suspension de mortier non colorée ou colorée différemment étant chargée dans les autres zones.

13. Procédé selon la revendication 12, **caractérisé en ce que** la suspension de mortier est réglée de manière thixotropique par addition d'un épaississant, de préférence choisi parmi l'argile, telle que la bentonite ; la silice, telle que la silice pyrogène ou hautement dispersée ; les biopolymères tels que l'amidon ou les polysaccharides et leurs mélanges.
